# EUROPÄISCHE PATENTANMELDUNG

(11) **EP 3 690 204 A1**
(43) Veröffentlichungstag der Anmeldung: **05.08.2020**
(21) Anmeldenummer: 20152359.4
(22) Anmeldetag: 17.01.2020
(51) Int. Cl.: F01K 3/00

(54) **SPEICHERVORRICHTUNG UND VERFAHREN ZUR WÄRMESPEICHERUNG UND (RÜCK-)UMWANDLUNG IN ELEKTRISCHE ENERGIE**

(30) Priorität: 30.01.2019 DE 102019102402
(71) Anmelder: Technische Hochschule Mittelhessen, 35390 Giessen (DE)
(72) Erfinder: Ascher, Torsten, 35466 Rabenau (DE); Herzog, Sergej, 35463 Fernwald (DE); Lechner, Stefan, 03058 Neuhausen/Spree (DE); Meier, Thorben Jan-Paul, 35112 Fronhausen (DE); Richter, Manuela, 35390 Gießen (DE)
(74) Vertreter: Stumpf, Peter

(57) **Zusammenfassung**

Gegenstand der Erfindung ist eine Speichervorrichtung 1 und ein Verfahren zur Energiespeicherung und zur Umwandlung von gespeicherter Hochtemperaturwärme in elektrischen Energie mittels eines modifizierten inversen Gasturbinenprozesses. Die Speichervorrichtung umfasst eine Speichereinheit 10 mit einem Feststoffspeicher 100 zur Speicherung von Energie und wenigstens einem Heizelement 110 zur Einspeicherung von Energie in den Feststoffspeicher 100.

Die Speichervorrichtung 1 umfasst weiterhin eine Rückverstromungseinheit 20 mit wenigstens einer Turbine 200 zur Umwandlung von Wärmeenergie eines Arbeitsmediums in elektrische Energie, einen Wärmeübertrager 210 zur Abfuhr von Wärme und damit verbunden dem Schließen des thermodynamischen Kreislaufes sowie wenigstens einen Verdichter 230.

Weiterhin umfasst die Rückverstromungseinheit 20 einen Arbeitsmediumkreislauf 220, wobei dieses ein geschlossenes von einem Arbeitsmedium durchströmbares System bildet und so ausgebildet ist, dass Wärmeenergie zwischen der Speichereinheit 10 und der Rückverstromungseinheit 20 transportiert werden kann. Die Rückverstromungseinheit 20 umfasst wenigstens einen Verdichter 230. Der Verdichter 230 ist im Arbeitsmediumkreislauf 220 so zwischen dem Wärmeübertrager 210 und der Speichereinheit 10 angeordnet, dass das Arbeitsmedium den Verdichter 230 nach dem Passieren des Wärmeübertragers 210 durchströmen kann.

## Beschreibung

Die vorliegende Erfindung betrifft eine Speichervorrichtung und ein Verfahren zur Wärmespeicherung und (Rück-)Umwandlung in elektrische Energie.

### Beschreibung und Einleitung des allgemeinen Gebietes der Erfindung

In der Energiewirtschaft besteht die Aufgabe, bei leitungsgebundenen Energieformen, wie z. B. Elektrizität, Gas oder Fernwärme, die von den einzelnen Abnehmern momentan benötigte Leistung bereit zu stellen. Da der zeitliche Verlauf der Bereitstellung der jeweiligen Energieform bzw. deren Erzeugung und Einspeisung in die Übertragungs- und Verteilnetze oftmals von dem abnehmerseitigen Bedarf erheblich abweicht, stellt sich die zusätzliche technische Aufgabe der Zwischenspeicherung von Energie.
Dies ist bei Gas und Fernwärme technisch gut umsetzbar, die Speicherung von elektrischer Energie ist derzeit jedoch kaum wirtschaftlich im großen Maßstab realisierbar.

### Stand der Technik

In der Vergangenheit wurde elektrische Energie überwiegend aus fossilen Energieträgern in großen Kraftwerken erzeugt. Die Anpassung der momentanen Erzeugerleistung an die momentane Last war mit erheblichen Nachteilen bei der Effizienz der Stromerzeugung verbunden. Im tageszeitlichen Wechsel zwischen Hochlast über Tag und Niedriglast während der Nacht wurde dieser Nachteil durch Speicherung von elektrischer Energie während der Nacht und die Entnahme von elektrischer Energie über Tag zur Deckung eines erhöhten Bedarfs ausgeglichen. Dadurch lässt sich der Leistungsgang der Stromerzeugung soweit glätten, dass für die meisten fossil befeuerten Kraftwerke ein weitgehend kontinuierlicher Leistungsverlauf innerhalb eines 24-Stunden-Zyklus erreicht wird. Die Speicherung mittels Pumpspeicher-Kraftwerken stellt dabei die effizienteste Methode dar. Sie wird seit vielen Jahren erfolgreich angewendet. Wesentliches Merkmal dieses Speicherbetriebs ist ein periodischer Lastgang im 24-Stunden-Zyklus und eine weitgehend konstante Leistung der Stromerzeugungsanlagen.

Mit der Einbeziehung von Elektrizität aus erneuerbaren Ressourcen ergibt sich die besondere Aufgabe, dass zusätzlich zu den abnehmerseitigen tageszeitlichen Schwankungen auch Schwankungen bei der Stromerzeugung auftreten. Dies gilt in besonderem Maße bei der Gewinnung von Solar- und Windstrom. Während das Angebot an Solarstrom ebenfalls einen Zyklus im 24-Stunden-Takt aufweist und sich dieser weitgehend in das netzseitige Lastprofil einfügt, ergibt sich bei Windstromanlagen eine zusätzliche Aufgabe. Der stochastische Anfall von Windstrom erfordert neue Speicherkonzepte, mit deren Hilfe eine Speicherung von elektrischer Energie hochflexibel und losgelöst von periodischen Leistungs- und Lastgängen ermöglicht wird.

Ein bekanntes Mittel zur Zwischenspeicherung von Energie sind sogenannte Wärmespeicher. Sie werden beispielsweise zur Zwischenspeicherung überschüssiger Prozesswärme verwendet, um die Wärme zu einem späteren Zeitpunkt auf geeignete Weise verwenden zu können. Diese Wärmespeicher weisen Speicherelemente auf. Diese bestehen aus einem wärmespeichernden Material, wobei insbesondere keramisches Material zum Einsatz kommt. Zum Aufladen des Wärmespeichers wird ein heißer Mediumstrom durch die Speicherelemente geleitet, sodass diese aufgeheizt werden. Zum Entladen des Wärmespeichers beziehungsweise zum Entnehmen der gespeicherten Wärme wird ein kalter Mediumstrom durch die aufgeheizten Speicherelemente geleitet, wodurch der Mediumstrom aufgeheizt wird und nach dem Durchströmen der Speicherelemente als heißer Mediumstrom zur Verfügung steht.
Problematisch ist, dass die gespeicherte Energie als Wärme vorliegt und eine (Rück-)Umwandlung in elektrische Energie in bisherigen Lösungen entweder nicht vorgesehen ist oder mit sehr großen Verlusten verbunden ist.

### Aufgabe

Aufgabe der vorliegenden Erfindung ist es eine Vorrichtung und ein Verfahren bereitzustellen, um gespeicherte Hochtemperaturwärme in einem inversen Gasturbinenprozess in mechanische Arbeit und anschließend in elektrische Energie umzuwandeln.

### Lösung der Aufgabe

Die Lösung dieser Aufgabe ergibt sich aus den Merkmalen des Hauptanspruchs. Weiterhin sind vorteilhafte Ausgestaltungen und Weiterbildungen der Erfindung den Unteransprüchen entnehmbar.

Wärmeenergie kann auf verschiedenen Temperaturniveaus vorkommen:
- Hochtemperaturwärme liegt bei Temperaturen über 100 °C vor und wird für Wärmekraftmaschinen (etwa in Kraftwerken) benötigt. Sie kann durch Verbrennungsprozesse oder aus elektrischer Energie gewonnen werden. Oftmals liegen die hierbei auftretenden Temperaturen bei 200 °C bis 1500 °C.
- Niedertemperaturwärme liegt bei Temperaturen von unter 100 °C vor und wird insbesondere für Heizzwecke benötigt. Oftmals liegen die hierbei auftretenden Temperaturen sogar unter 50 °C.

Die Wertigkeit von Wärme bei hohen Temperaturen ist höher als die von Niedertemperaturwärme: Sie ist vielseitiger verwendbar, aber auch tendenziell aufwendiger zu gewinnen. Man sollte möglichst vermeiden, Niedertemperaturwärme einfach aus Hochtemperaturwärme zu gewinnen.

Hochtemperaturwärme kann als eine höherwertige Energieform als Niedertemperaturwärme angesehen werden, da sie mehr Möglichkeiten bietet, etwa die effizientere Umwandlung in mechanische Energie. Wenn beispielsweise ein geothermisches Reservoir oder eine Quelle von Abwärme nur Temperaturen von 80 °C liefert, ist dies für die Gewinnung elektrischer Energie meist nicht ausreichend. Solche Wärme kann nur z. B. für Heizzwecke verwendet werden. Die "Wertigkeit" von Wärme kann als Exergie-Gehalt ausgedrückt werden.

Zum Zweck der Energiespeicherung gepaart mit anschließender Rückumwandlung in elektrische Energie ist deshalb eine Speicherung in Form von Hochtemperaturwärme notwendig. Diese Umwandlung kann dabei über einen modifizierten inversen Gasturbinenprozess erfolgen. Dabei wird thermische Energie erst in mechanische Energie und diese wiederum in elektrische Energie überführt. Kennzeichen des inversen Gasturbinenprozess ist, dass die Turbine auf ein Druckniveau unterhalb des Umgebungsdruckes entspannt.

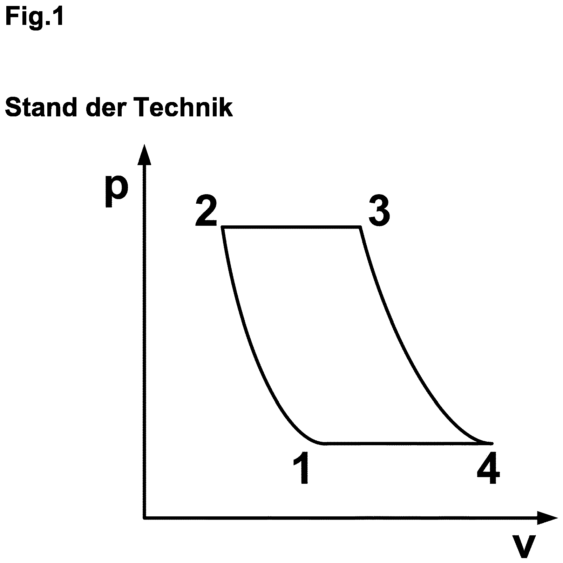

Thermodynamische Grundlage des Gasturbinenprozesses ist der Joule-Brayton-Vergleichsprozess, welcher durch ein Druck (p)-Volumen (V)-Diagramm in der Abbildung Fig. 1 dargestellt ist. Dieser Vergleichsprozess umfasst vier Zustandspunkte sowie vier Zustandsänderungen. Zwischen Zustandspunkt 1 und 2 erfolgt eine isentrope Verdichtung, bei der dem Prozess weder Wärme noch Entropie zugeführt wird. Daran anschließend wird zwischen den Zustandspunkten 2 und 3 dem Prozess isobar, das heißt bei gleichbleibendem Druck, Wärme zugeführt. Die Zustandsänderung zwischen den Punkten 3 und 4 erfolgt wiederum isentrop. Um den Kreislauf zu schließen wird zwischen den Punkten 1 und 4 dem Prozess isobar Wärme abgeführt.

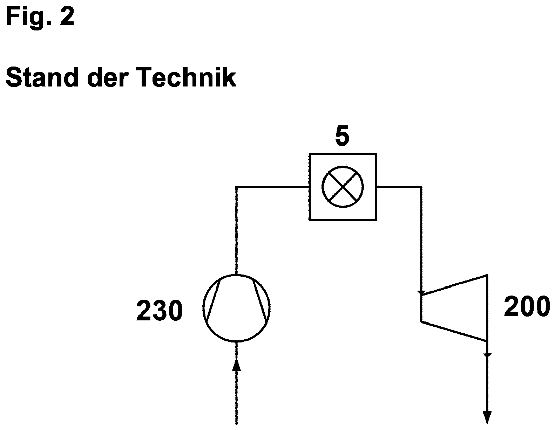

In einem Gasturbinenprozess, siehe Abbildung Fig.2, werden nun die oben beschriebenen Zustandsänderungen durch Komponenten übernommen. Der Verdichter saugt im Zustandspunkt 1 Umgebungsluft mit Umgebungsdruck an und verdichtet diese auf ein höheres Druckniveau. Die verdichtete Umgebungsluft wird nun zum Zwecke der Wärmezufuhr einer Brennkammer 5 zugeführt und dort zusammen mit einem Brennstoffgemisch verbrannt. Das aus dem Verbrennungsprozess entstehende Rauchgasgemisch wird der Turbine (Zustandsänderung 3-4) zugeführt und dort unter Energieabgabe entspannt. Eine Rückführung der Rauchgase in den Verdichter (4-1) ist nicht möglich, da für die Verbrennung innerhalb der Brennkammer 5 Frischluft benötigt wird. Kennzeichen des Gasturbinenprozesses ist, dass die Verbrennung auf einem Druckniveau oberhalb des Umgebungsdruckes erfolgt und somit die Turbine von einem hohen Druck auf Umgebungsdruck entspannt.

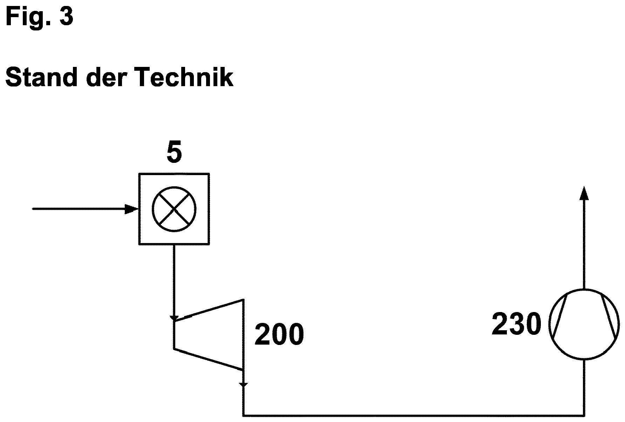

Der inverse Gasturbinenprozess ist dadurch gekennzeichnet, dass sich die Durchströmungsrichtung umkehrt und somit Verdichter und Turbine getauscht werden. In einem inversen Prozess saugt die Gasturbine das Arbeitsmedium mit Umgebungsdruck an und entspannt dieses in den Unterdruck, von dem aus der Verdichter das Arbeitsmedium wieder auf Umgebungsdruck verdichtet. In einer Ausführungsvariante dieses Prozesses wird die Brennkammer 5 vor die Turbine geschaltet, sodass die Verbrennung bei Umgebungsdruck verläuft (siehe Abbildung Fig.3). In der hier beschrieben Speichervorrichtung wird das Verfahren des inversen Gasturbinenprozesses modifiziert, wobei die Speichervorrichtung derart ausgestaltet ist, dass sowohl ein offener als auch ein geschlossener inverser Gasturbinenprozess realisiert werden kann.

Die erfindungsgemäße Speichervorrichtung 1 sowie das erfindungsgemäße Verfahren zur Energiespeicherung und zur Umwandlung der gespeicherten Hochtemperaturwärme in einem inversen Gasturbinenprozess in elektrische Energie, umfasst eine Speichereinheit 10 und eine Rückverstromungseinheit 20.

Die Speichereinheit 10 umfasst einen Feststoffspeicher 100 sowie wenigstens ein Heizelement 110 zur Einspeicherung von Energie. Das Heizelement 110 ist dabei als elektrisches Heizelement ausgeführt. Elektrische Heizelemente sind die verbreitetste Form von Heizelementen, sie wandeln elektrischen Strom in Wärme um. Diese Art der Energiewandlung ermöglicht eine hohe Flexibilität sowie eine schnelle Betriebsbereitschaft der Speichereinheit.

Der Feststoffspeicher 100 ist dabei als Hochtemperaturspeicher ausgebildet. Hochtemperaturspeicher bestehen in der Regel aus keramischen oder aus metallischen Verbindungen. Klassisch werden als Feststoffspeicher Beton, Speichergranulate, aluminiumoxid basierte Keramiken, Schotter oder Kies eingesetzt. Diese Stoffe zeichnen sich durch eine jeweils hohe Druckfeuerbeständigkeit, Temperaturwechselbeständigkeit und hohe spezifische Wärmekapazität aus. Das Speichermaterial kann dabei entweder als Schüttung und oder als Formsteine vorliegen.

Die Rückverstromungseinheit 20 umfasst eine Rückverstromungsbaugruppe mit thermischen Komponenten. Sie dient zur Generierung von elektrischer Energie bei gleichzeitiger Bereitstellung von thermischer Energie. Durch die im folgenden beschriebenen Ausführungsvarianten weist die Rückverstromungseinheit 20 und somit die Speichervorrichtung 1 verschiedene Vorteile auf. Das System kann ohne externe Stromversorgung nur durch zusätzliche Batterien angefahren werden, besitzt somit Schwarzstartfähigkeit. Außerdem weist die Rückverstromungseinheit 20 durch den Gasturbinenprozess eine hohe Flexibilität sowie eine schnelle Betriebsbereitschaft auf.

Die Rückverstromungseinheit 20 umfasst wenigstens eine Turbine 200 zur Umwandlung von Wärmeenergie eines Arbeitsmediums in elektrische Energie. Bei der wenigstens einen Turbine 200 handelt es sich vorzugsweise um eine Gasentspannungs- oder-Expansionsturbine. Es handelt sich vorzugsweise um eine Gasturbine im engeren Sinne, d. h. um eine Turbine (Strömungsmaschine), in der Gas expandiert und dabei Arbeit leistet. Die Turbine 200 umfasst im Gegensatz zu einer Gasturbine im weiteren Sinne nur die Welle und die Turbinenschaufeln, aber keinen Verdichter und keine Brennkammer als integralen Bestandteil der Maschine. Das zu expandierende Gas wird also nicht von der Maschine selbst bereitgestellt (z. B. durch einen Verbrennungsprozess). Die Erwärmung des zu expandierenden Arbeitsmediums geschieht in der Speichereinheit.

Weiterhin ist es auch möglich, wenigstens eine weitere Turbine 205 zu verwenden welche parallel oder seriell zur ersten Turbine 200 angeordnet ist. Bei einer parallelen Anordnung der wenigstens einen weiteren Turbine 205 ist es möglich die Turbinen 200, 205 mit unterschiedlichen Mengen Arbeitsmedium zu durchströmen. Bei wenigstens zwei zusätzlichen Turbinen kann eine beliebige Kombination aus Parallel- oder Serienschaltung der Turbinen erfolgen.

Die Rückverstromungseinheit 20 umfasst weiterhin wenigstens einen ersten Wärmeübertrager 210 zwischen der wenigstens einen Turbine 200 und dem wenigstens einem Verdichter 230, um den thermodynamischen Kreislauf durch Wärmeabfuhr zu schließen. Die abgeführte Wärme kann dabei einer weiteren Verwendung in Wärmenetzen zugeführt werden. Des Weiteren erhöht die Abfuhr der Wärme und die damit verbundenen niedrigere Verdichtereintrittstemperatur den Wirkungsgrad des Prozesses.

Wärmeübertrager sind Vorrichtungen, die thermische Energie von einem Stoffstrom auf einen anderen übertragen. Das Material, aus dem der Wärmeübertrager besteht, muss für eine gute Effizienz eine gute Wärmeleitung und die damit gefertigte Vorrichtung selbst eine große Oberfläche aufweisen. Weiter muss der Wärmeübergang zwischen den Oberflächen des Wärmerträgers und den strömenden Medien, zwischen denen er Wärme überträgt, möglichst gut sein. Wärmeübertrager bestehen üblicherweise aus Metall, jedoch ist es auch mögliche diese aus Emaille, Kunststoff, Glas oder einer Keramik wie z.B. Siliziumcarbid zu fertigen. Weiterhin umfassen die thermischen Komponenten einen Arbeitsmediumkreislauf 220. Dieser bildet vorzugweise ein geschlossenes von einem Fluid durchströmbares System. Durch den Arbeitsmediumkreislauf 220 strömt ein auch als Arbeitsmedium bezeichnetes Fluid. Dieses Fluid kann Wärmeenergie zwischen der Speichereinheit 10 und der Rückverstromungseinheit 20 transportieren. Bei dem verwendeten Fluid kann es sich beispielsweise um ein Gas oder Gasgemisch (z.B. Kohlendioxid, Stickstoffmonoxid, Sauerstoff, Kohlenmonoxid, Luft, Stickstoff, Wasserstoff, Helium und/oder Neon) oder Wasserdampf handeln.

Die Wärmezufuhr an das Arbeitsmedium innerhalb des Arbeitsmediumkreislauf 220 wird nicht durch eine chemische Reaktion in Form einer Verbrennung hervorgerufen, sondern durch Wärmeübertragung innerhalb des Feststoffspeichers.

Die Rückverstromungseinheit 20 umfasst weiterhin wenigstens einen Verdichter 230. Dieser ist im Arbeitsmediumkreislauf 220 so zwischen der wenigstens einen Turbine 200 und der Speichereinheit 10 angeordnet, dass das Arbeitsmedium ihn nach dem Passieren der Turbine 200 und des Wärmeübertragers 210 durchströmen kann.

Weiterhin ist es auch möglich, wenigstens einen weiteren Verdichter 235 zu verwenden welcher parallel oder seriell zum ersten Verdichter 230 angeordnet ist. Bei einer parallelen Anordnung des wenigstens einen weiteren Verdichters 235 ist es möglich die Verdichter 230, 235 mit unterschiedlichen Mengen Arbeitsmedium zu durchströmen. Bei wenigstens zwei zusätzlichen Turbinen kann eine beliebige Kombination aus Parallel- oder Serienschaltung der Turbinen erfolgen.

Der Arbeitsmediumkreislauf 220 ist so ausgebildet, dass er die Rückverstromungseinheit 20 mit der Speichereinheit 10 verbindet. Weiterhin ist der Arbeitsmediumkreislauf 220 so ausgebildet, dass das Arbeitsmedium nach dem Passieren der Speichereinheit 10 wenigstens eine Turbine 200, wenigstens einen Wärmeübertrager 210 und wenigstens einen Verdichter 230 durchströmt. Die wenigstens eine Turbine 200 und der wenigstens eine Verdichter 230 sind so angeordnet, dass das Arbeitsmedium auf ein Druckniveau unterhalb des Umgebungsdruckes entspannt werden kann von dem aus der wenigstens eine Verdichter 230 das Arbeitsmedium wieder mindestens auf Umgebungsdruck verdichten kann. Umgebungsdruck meint hierbeiden Normdruck von 1013,25 hPa,. Der Arbeitsmediumkreislauf 220 ist so ausgebildet, dass bei allen Arbeitsmedien, der Prozess als geschlossener Prozess durchgeführt werden kann. Bei Luft als Arbeitsmedium ist eine offene oder eine geschlossene Prozessführung möglich.

In einer zweiten Ausführungsform der erfindungsgemäßen Vorrichtung 1 umfasst die Rückverstromungseinheit 20 weiterhin einen zweiten Wärmeübertrager 260. Dieser ist als Rekuperator oder Regenerator ausgebildet. Bei Rekuperatoren erfolgt die Wärmeübertragung zwischen heißem und kaltem Strom zeitlich parallel, indem beide Ströme zur gleichen Zeit den Wärmeübertrager durchfließen. Bei Regeneratoren hingegen erfolgt die Wärmeübertragung zeitlich versetzt, da die beiden Ströme abwechselnd den Wärmeübertrager durchströmen.

Der zweite Wärmeübertrager 260 ist zwischen der wenigstens einen Turbine 200 und dem ersten Wärmeübertrager 210 im Arbeitsmediumkreislauf 220 angeordnet. Der zweite Wärmeübertrager 260 steht in thermischen Kontakt mit einem Abschnitt des Arbeitsmediumkreislaufs 220 zwischen dem Verdichter 230 und der Speichereinheit 10. Der zweite Wärmeübertrager 260 dient dazu, das Arbeitsmedium vor dem Übergang in den Feststoffspeicher 100 vorzuwärmen, um die Restwärme des Arbeitsmediums nach dem Passieren der Turbine 200 optimal auszunutzen. Kennzeichen dieses zweiten Wärmeübertragers 260 ist die Wärmerückgewinnung nach der wenigstens einen Turbine und damit verbunden die Vorwärmung des Arbeitsmediums vor Eintritt in die Speichereinheit 10. Hierdurch wird sowohl die Heizlast im Feststoffspeicher 100, als auch die Kühllast im Wärmeübertrager 210 verringert.

In einer dritten Ausführungsform der erfindungsgemäßen Vorrichtung 1 umfasst sie weiterhin eine Dampfeinspritzung 24 bestehend aus einem Verdampfer 240, einer Dampfleitung 245 und einer Kondensatleitung 60. Diese ist zwischen dem zweiten Wärmeübertrager 260 und Wärmeübertrager 210 angeordnet und ist so ausgebildet, dass sie gasförmiges Arbeitsmedium (z.B. Wasserdampf) dem Arbeitsmediumkreislauf 220 vor Eintritt in die wenigstens eine Turbine 200 hinzufügen kann. Hierzu wird Wasser, welches im ersten Wärmeübertrager 210 kondensiert, über die Kondensatleitung 60 dem Verdampfer 240 zugeführt und verdampft. Der Wasserdampf tritt dann über die Dampfleitung 245 in den Arbeitsmediumkreislauf 220 ein und wird mit dem Arbeitsmedium gemischt und nach Passieren der wenigstens einen Turbine 200 im Verdampfer 240 gekühlt und im Wärmeübertrager 210 auskondensiert. Durch die Dampfeinspritzung 24 kann der Massenstrom des Arbeitsmediums in der wenigstens einen Turbine 200 erhöht werden. Durch diese Maßnahme kann erreicht werden, dass der Massenstrom des Arbeitsmediums in der Turbine größer ist, als der Massenstrom des Arbeitsmediums im Verdichter 230. Dies steigert den Wirkungsgrad der Gesamtvorrichtung.

In einer vierten Ausführungsform der erfindungsgemäßen Vorrichtung 1 umfasst die Rückverstromungseinheit 20 weiterhin wenigstens eine Bypassleitung 250 und/oder eine Bypassleitung 255. Die Bypassleitung 255 ist so angeordnet, dass sie die Turbine 200 umgeht, sodass das Arbeitsmedium zumindest teilweise um die Turbine herum geleitet werden kann, damit die Turbine 200 nicht durch zu hohe Gastemperaturen beschädigt wird. Die Bypassleitung 250 ist so angeordnet, dass sie die Speichereinheit 10 umgeht, sodass das Arbeitsmedium zumindest teilweise die Speichereinheit 10 umgeht, sodass die Temperatur der Speichereinheit 10 über der Eintrittstemperatur der Turbine 200 liegen kann. Die Bypassleitung 255 dient dazu, den Speicher 100 ohne Nutzung der Turbine 200 zu entladen. Dies ist beispielsweise notwendig, wenn es zu einer Notabschaltung der Turbine gekommen ist.

In einer fünften Ausführungsform der erfindungsgemäßen Vorrichtung 1 umfasst sie weiterhin noch einen Einlass 30 und einen Auslass 35. Sowohl Einlass 30 und Auslass sind zwischen Verdichter 230 und Speichereinheit 10 angeordnet. Wenn ein zweiter Wärmeübertrager 260 vorhanden ist, so sind Einlass 30 und Auslass 35 zwischen Verdichter 230 und zweitem Wärmeübertrager 260 angeordnet. Damit kann auf einfache Weise Luft als Arbeitsmedium eingesetzt werden. Der Einlass kann dabei als steuerbares Ventil ausgeführt sein. Es ist auch möglich zusätzlich zum Einlass 30 einen separaten Auslass 35 zu verwenden. Wenn die Vorrichtung 1 einen separaten Auslass 35 aufweist, ist es vorteilhaft, dass sie weiterhin noch einen mit diesem Auslass 35 verbundenen Schornstein 40 aufweist, durch den die Luft in die Umgebung entweichen kann.

Weiterhin kann zusätzlich nach dem wenigstens einen Verdichter 230 und vor Einlass 30 wenigstens ein dritter Wärmeübertrager 215 angeordnet sein.

Verfahren: Das dem erfindungsgemäßen Verfahren zu Grunde liegende Prinzip ist das des geschlossenen inversen Gasturbinenprozesses ohne Brennkammer. In einer besonderen Ausführungsform, bei der Luft als Arbeitsmedium eingesetzt wird, kann es sich auch um einen offenen inversen Gasturbinenprozess ohne Brennkammer handeln.

Es ist aber auch möglich das Verfahren durchzuführen, wenn der Druck des Arbeitsmediums um bis zu 40 mbar vom Umgebungsdruck abweicht. Diese mögliche Abweichung wird im Folgenden als Druckdifferenz bezeichnet.

Zunächst durchströmt das Arbeitsmedium innerhalb des Abeitsmediumkreislaufs den Feststoffspeicher 100. Dabei erwärmt es sich vorzugsweise wenigstens auf 1000°C. Die Wärmezufuhr an das Arbeitsmedium innerhalb des Arbeitsmediumkreislauf 220 erfolgt nicht durch eine chemische Reaktion in Form einer Verbrennung, sondern durch Wärmeübertragung innerhalb des Feststoffspeichers 100. Kennzeichen hierbei ist, dass die Wärmezufuhr durch den Feststoffspeicher bei vorzugsweise höchstem einem Druck in Höhe des Umgebungsdruckes plus Druckdifferenz stattfindet und somit der Feststoffspeicher als druckloser Behälter ausgeführt werden kann.

Anschließend durchläuft das Arbeitsmedium die wenigstens eine Turbine 200 und gibt Energie ab, wobei die thermische Energie des Arbeitsmediums in elektrische Energie umgewandelt wird. Kennzeichen ist, dass die Turbine das Arbeitsmedium, welches mit höchstem einem Druck in Höhe des Umgebungsdruckes plus Druckdifferenz in die Turbine eintritt, auf einen Druck unterhalb des Umgebungsdruckes entspannt.

Danach durchläuft das Arbeitsmedium den ersten Wärmeübertrager 210 und den Verdichter 230, welcher das Arbeitsmedium von Unterdruck auf höchstem einen Druck in Höhe des Umgebungsdruckes plus Druckdifferenz verdichtet, bevor es wieder zum Feststoffspeicher 100 gelangt.

Das Verfahren zur Energiespeicherung und Energierückgewinnung durch die erfindungsgemäße umfasst damit die folgenden Verfahrensschritte:
a) Durchströmen des Feststoffspeichers 100 mit dem Arbeitsmedium innerhalb des Arbeitsmediumkreislaufs, wobei sich das Arbeitsmedium durch Wärmeübertragung innerhalb des Feststoffspeichers 100 erwärmt.
b) Durchlaufen der wenigstens einen Turbine 200 mit dem Arbeitsmedium, wobei die Turbine das Arbeitsmedium, welches mit höchstem einem Druck in Höhe des Umgebungsdruckes plus Druckdifferenz , auf einen Druck unterhalb des Umgebungsdruckes entspannt, wodurch die thermische Energie des Arbeitsmediums in elektrische Energie umgewandelt wird,
c) Durchlaufen des ersten Wärmeübertragers 210 und des Verdichters 230 mit dem Arbeitsmedium, wobei das Arbeitsmedium verdichtet wird,
d) Zurückströmen des Arbeitsmediums zum Feststoffspeicher 100

In einer besonderen Ausführungsform des erfindungsgemäßen Verfahrens wird das oben beschriebene Verfahren durch eine Dampfeinspritzung ergänzt, wobei das arbeitsmedium vor dem Passieren des Verdichters 230 zusätzlich den zweiten Wärmeübertrager 260 und den Verdampfer 240 durchströmt.

Nachdem das Arbeitsmedium den zweiten Wärmeübertrager 260 passiert hat, beheizt es den Verdampfer 240 und kühlt dabei seinerseits ab. Im Anschluss daran führt die Abkühlung des Arbeitsmediums im ersten Wärmeübertrager 210 zur Kondensation von Wasser aus dem Arbeitsmedium heraus. Dieses Kondensat wird abgeführt und zur Sekundärseite des Verdampfers 240 geleitet, wo es verdampft wird und durch die Dampfleitung 245 zum Ort der Einspritzung (vor der Turbine 200) gelangt. Der Massenstrom des im Wärmeübertrager 210 abgeführten Kondensats ist (bei geschlossenem Betrieb) gleich dem Massenstrom des als Teil des Arbeitsmediums dienenden eingespritzten Dampfes. Durch diese Maßnahme wird der absolute Wassergehalt des Arbeitsmediums angehoben auf den Wert, der dem Sättigungszustand bei den im Wärmeübertrager 210 vorliegenden Parametern entspricht. Im Idealfall wird durch diesen Betrieb kein Wasser verbraucht und der Aufwand zur Wasseraufbereitung wird minimiert bzw. entfällt vollständig.

Das Verfahren der Dampfeinspritzung kann allerdings auch bei offenem Betrieb angewandt werden: Der Aufbau der Vorrichtung unterscheidet sich nicht im Vergleich zum geschlossenen Betrieb, jedoch wird mit dem Auslass 35 aus der Anlage abgeführten Arbeitsmedium kontinuierlich auch Wasser ausgestoßen. Dieser Wasserverlust muss ausgeglichen werden und fordert eine kontinuierliche Zufuhr von aufbereitetem Wasser.

### Abbildungslegenden und Bezugszeichenliste

Fig.1 zeigt die Darstellung des Joule-Brayton-Prozesses im Druck(p)-Volumen (V)-Diagramm mit isentropen Zustandsänderungen von 1 nach 2 sowie 3 nach 4 und isobaren Zustandsänderungen von 2 nach 3 sowie 4 nach 1
Fig.2 zeigt den schematischen Aufbau eines Gasturbinenprozesses bestehend aus einem Verdichter 230, einer Brennkammer 5 und einer Turbine 200
Fig.3 zeigt den schematischen Aufbau eines inversen Gasturbinenprozesses bestehend aus einer Brennkammer 5 einer Turbine 200 und einem Verdichter 230

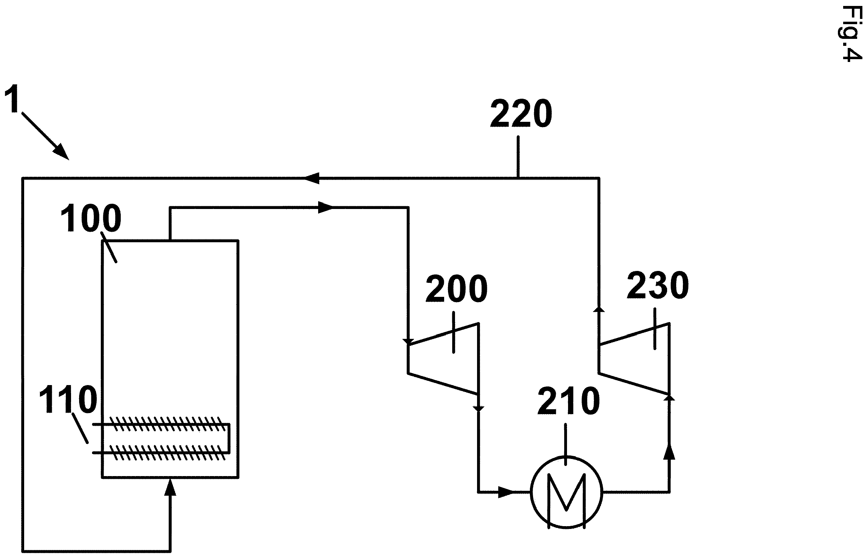

Fig.4 zeigt eine schematische Abbildung des Speichersystems 1 in grundlegender Ausführung

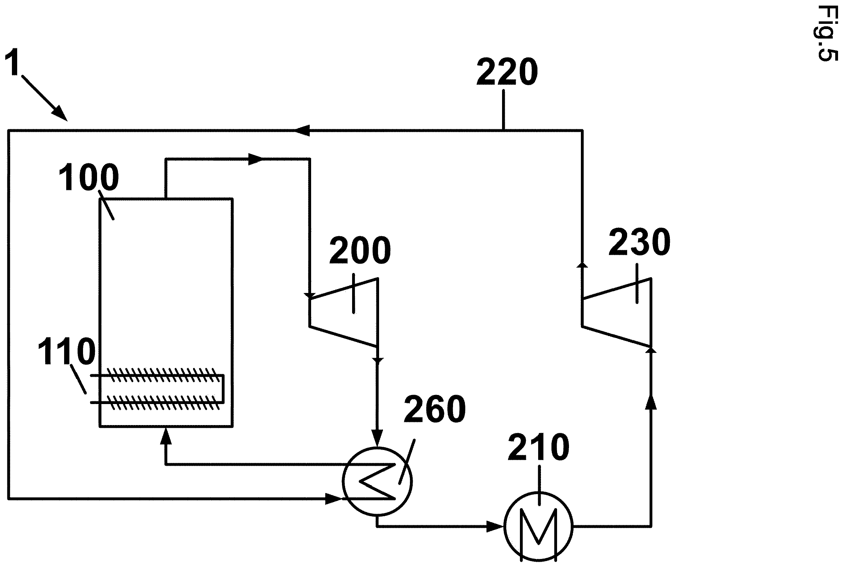

Fig.5 zeigt eine schematische Abbildung des Speichersystems 1 aus Fig. 4 in der Ausführungsvariante mit einem zweiten Wärmeübertrager 260

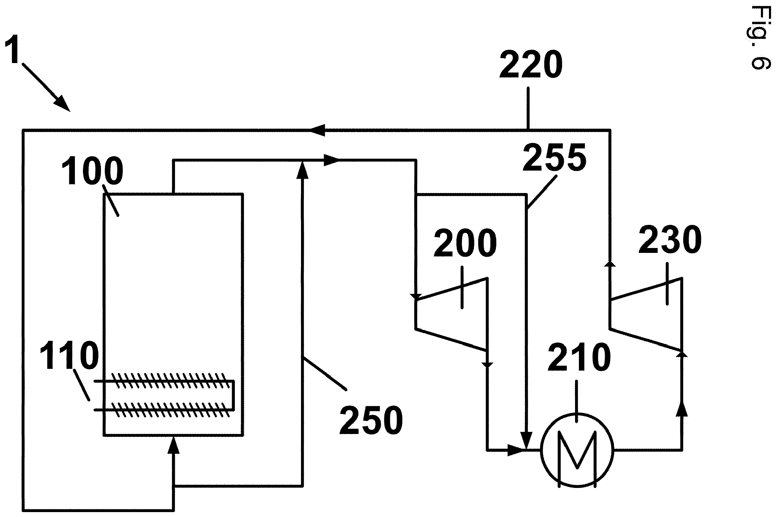

Fig.6 zeigt eine schematische Abbildung des Speichersystems 1 aus Fig. 4 erweitert um die Bypassleitungen 250 und 255

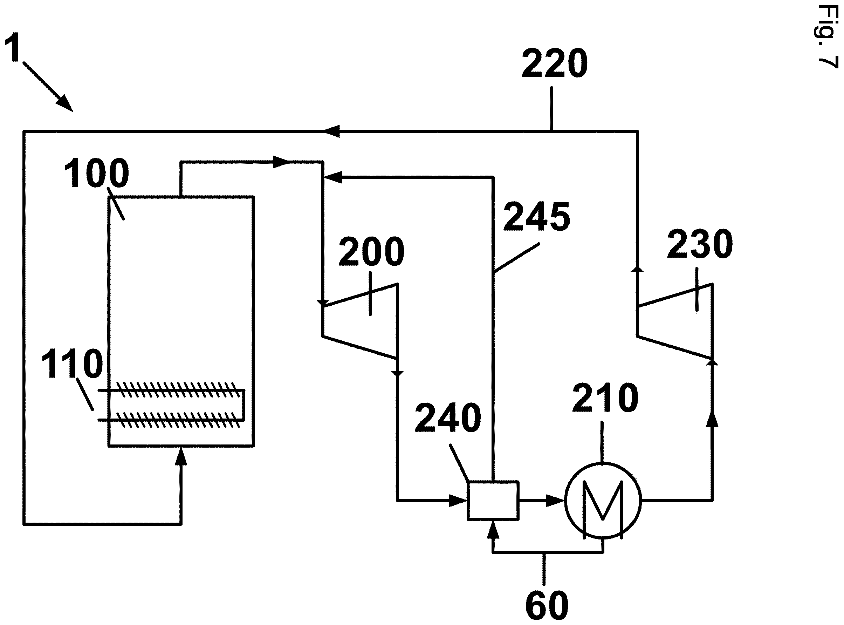

Fig.7 zeigt eine schematische Abbildung des Speichersystems 1 aus Fig. 4 erweitert um die Dampfeinspritzung 24 bestehend aus einem Verdampfer 240 und einer Dampfleitung 245

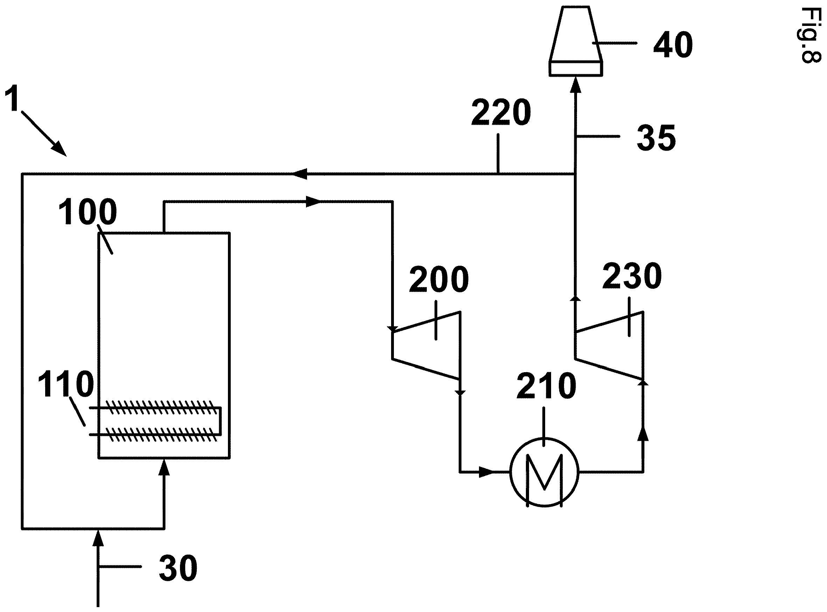

Fig. 8 zeigt eine schematische Darstellung des Speichersystems 1 aus Fig. 4 erweitert um einen Einlass 30, einen Auslass 35 sowie einen Schornstein 40

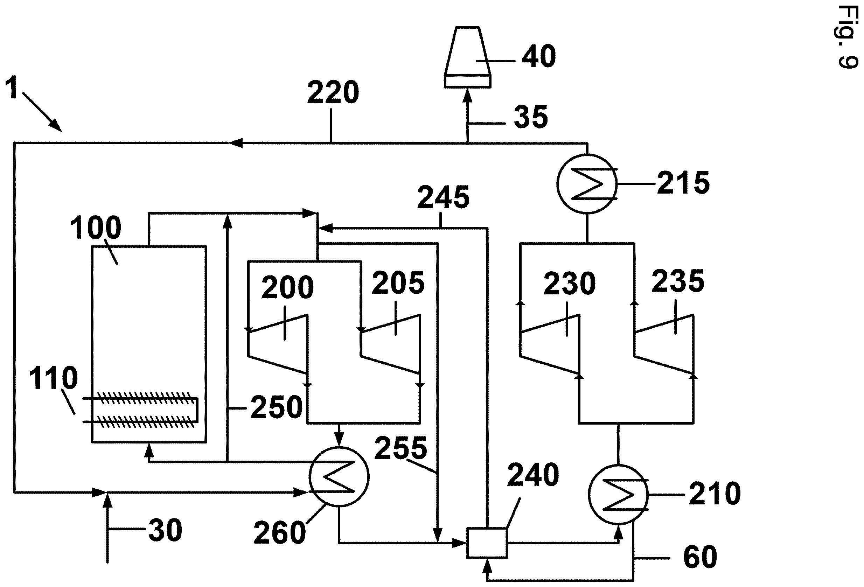

Fig. 9 zeigt eine schematische Darstellung des Speichersystems 1 aus Fig.4 bestehend aus einem zweiten Wärmeübertrager 260, der Speichereinheit 10, einer Bypassleitung 250, wenigstens zwei Turbinen 200,205, einer Bypassleitung 255, einem Verdampfer 240, einer Dampfleitung 245, einem Wärmeübertrager 210, wenigstens zwei Verdichtern 230, 235, einem Lufteinlass 30, einem Luftauslass 35, einem Schornstein, einem dritten Wärmeübertrager 215 sowie dem Arbeitsmediumkreislauf 220.

### Bezugszeichen

1 Speichervorrichtung
5 Brennkammer
10 Speichereinheit
100 Feststoffspeicher
110 Heizelement
20 Rückverstromungseinheit
200, 205 Turbine
210 erster Wärmeübertrager
215 dritter Wärmeübertrager
220 Arbeitsmediumkreislauf
230, 235 Verdichter
24 Dampfeinspritzung
240 Verdampfer
245 Dampfleitung
250, 255 Bypassleitung
260 zweiter Wärmeübertrager
30 Einlass
35 Auslass
40 Schornstein
60 Kondensatleitung

## Patentansprüche

1. Speichervorrichtung (1) zur Energiespeicherung und zur Umwandlung von gespeicherter Hochtemperaturwärme in elektrische Energie in einem inversen Gasturbinenprozess, umfassend
• eine Speichereinheit (10) umfassend
∘ einen Feststoffspeicher (100) zur Speicherung von Energie sowie zur Erwärmung eines Arbeitsmediums
∘ wenigstens ein Heizelement (110) zur Einspeicherung von Energie in den Feststoffspeicher (100)
• eine Rückverstromungseinheit (20) umfassend
∘ wenigstens eine Turbine (200) zur Umwandlung von Wärmeenergie eines Arbeitsmediums in elektrische Energie,
∘ einen Arbeitsmediumkreislauf (220), wobei dieser ein von einem Arbeitsmedium durchströmbares System bildet und so ausgebildet ist, dass Wärmeenergie zwischen der Speichereinheit (10) und der Rückverstromungseinheit (20) transportiert werden kann,
∘ wenigstens einen Verdichter (230), wobei dieser im Arbeitsmediumkreislauf (220) zwischen der Turbine (200) und dem Feststoffspeicher (100) angeordnet ist,
∘ einen ersten Wärmeübertrager (210) zwischen der wenigstens einen Turbine (200) und dem wenigstens einen Verdichter (230), um den thermodynamischen Kreislauf zu schließen, wobei das Arbeitsmedium den wenigstens einen Verdichter (230) nach dem Passieren der wenigstens einen Turbine (200) und des ersten Wärmeübertragers (210) durchströmen kann
**dadurch gekennzeichnet, dass** die wenigstens eine Turbine (200) und der wenigstens eine Verdichter (230), und der Arbeitsmediumkreislauf 220 so ausgebildet sind, dass bei allen Arbeitsmedien, der Prozess als geschlossener Prozess durchgeführt werden kann, sodassdas Arbeitsmedium in der wenigstens einen Turbine (200) auf ein Druckniveau unterhalb des Umgebungsdruckes entspannt werden kann und von dem aus das Arbeitsmedium durch den wenigstens einen Verdichter (230) wieder mindestens auf Umgebungsdruck verdichtet werden kann, wobei der wenigstens eine Verdichter (230) in Strömungsrichtung eines Arbeitsmediums nach der wenigstens einen Turbine (200) und vor dem Feststoffspeicher (100) angeordnet ist

2. Speichervorrichtung (1) gemäß Anspruch 1 **dadurch gekennzeichnet, dass** die Rückverstromungseinheit (20) weiterhin wenigstens einen zweiten Wärmeübertrager (260) umfasst, wobei dieser zwischen der Turbine (200) und dem ersten Wärmeübertrager (210) und zwischen Verdichter (230) und Feststoffspeicher (100) angeordnet ist.

3. Speichervorrichtung (1) gemäß Anspruch 2 **dadurch gekennzeichnet, dass** die Rückverstromungseinheit (20) weiterhin eine Dampfeinspritzung (24) bestehend aus einem Verdampfer (240), einer Dampfleitung (245) und einer Kondensatleitung (60) umfasst, wobei die Dampfeinspritzung (24) zwischen zweitem Wärmeübertrager (260) und erstem Wärmeübertrager (210) angeordnet und so ausgebildet ist, dass zusätzliches gasförmiges Arbeitsmedium aus dem Verdampfer (240) über die Dampfleitung (245) vor dem Passieren der wenigstens einen Turbine (200) zusätzlich in den Arbeitsmediumkreislauf (220) eingespritzt werden kann.

4. Speichervorrichtung (1) gemäß Anspruch 1, 2 oder 3 **dadurch gekennzeichnet, dass** die Rückverstromungseinheit (20) weiterhin wenigstens eine zusätzliche Turbine (205) enthält, welche entweder parallel oder seriell zu der ersten Turbine (200) angeordnet ist.

5. Speichervorrichtung (1) gemäß einem der vorigen Ansprüche **dadurch gekennzeichnet, dass** die Rückverstromungseinheit (20) weiterhin wenigstens einen zusätzlichen Verdichter (235) enthält, welcher entweder parallel oder seriell zum ersten Verdichter (230) angeordnet ist.

6. Speichervorrichtung (1) gemäß einem der vorigen Ansprüche **dadurch gekennzeichnet, dass** die Rückverstromungseinheit (20) weiterhin wenigstens eine Bypassleitung (250) umfasst, welche so angeordnet ist, dass Arbeitsmedium zumindest teilweise um die Speichereinheit (100) herum geleitet werden kann.

7. Speichervorrichtung (1) gemäß einem der vorigen Ansprüche **dadurch gekennzeichnet, dass** die Rückverstromungseinheit (20) weiterhin wenigstens eine Bypassleitung (255) umfasst, welche so angeordnet ist, dass Arbeitsmedium zumindest teilweise um die Turbine (200) herum geleitet werden kann.

8. Speichervorrichtung (1) gemäß wenigstens einem der vorigen Ansprüche **dadurch gekennzeichnet, dass** sie weiterhin wenigstens einen Einlass (30) und wenigstens einen Auslass (35) aus dem Arbeitsmediumkreislauf (220) umfasst, wobei diese zwischen dem Verdichter (230) und dem Eintritt in den Feststoffspeicher (100) angeordnet sind und mit dem Arbeitsmediumkreislauf (220) verbunden sind, wobei sowohl Einlass (30) wie Auslass (35) aus der Rückverstromungseinheit (20) mit einer Umgebung verbindbar sind, sodass das Arbeitsmedium aus dieser angesaugt und/oder in diese entlassen werden kann.

9. Verfahren zur Energiespeicherung und Energierückgewinnung durch eine Vorrichtung gemäß einem der vorigen Ansprüche 1 bis 8 umfassend folgende Schritte:
a) Durchströmen des Feststoffspeichers (100) mit dem Arbeitsmedium innerhalb des Arbeitsmediumkreislaufs (220), wobei sich das Arbeitsmedium durch Wärmeübertragung innerhalb des Feststoffspeichers (100) erwärmt,
b) Durchlaufen der wenigstens einen Turbine (200) mit dem Arbeitsmedium, wobei die Turbine das Arbeitsmedium, welches mit höchstens Druck in Höhe des Umgebungsdruckes plus Druckdifferenz in die Turbine eintritt, auf einen Druck unterhalb des Umgebungsdruckes entspannt, wodurch die thermische Energie des Arbeitsmediums in elektrische Energie umgewandelt wird,
c) Durchlaufen des ersten Wärmeübertragers (210) und des Verdichters (230) mit dem Arbeitsmedium, wobei das Arbeitsmedium verdichtet wird,
d) Zurückströmen des Arbeitsmediums zum Feststoffspeicher (100).

10. Verfahren zur Energiespeicherung und Energierückgewinnung gemäß Anspruch 9 **dadurch gekennzeichnet, dass** in Verfahrensschritt b) wenigstens zwei parallel geschaltete Turbinen (200, 205) mit unterschiedlichen Massenströmen des Arbeitsmediums beaufschlagt werden.

11. Verfahren zur Energiespeicherung und Energierückgewinnung gemäß Anspruch 9 oder 10 **dadurch gekennzeichnet, dass** in Verfahrensschritt c) wenigstens zwei parallel geschaltete Verdichter (230, 235) mit unterschiedlichen Massenströmen des Arbeitsmediums beaufschlagt werden.

12. Verfahren zur Energiespeicherung und Energierückgewinnung gemäß einem der Ansprüche 9 bis 11 **dadurch gekennzeichnet, dass** zwischen Verfahrensschritt b) und Verfahrensschritt c) wenigstens ein Massenstrom des Arbeitsmediums durch den zweiten Wärmeübertrager (260) ein Druckniveau unterhalb Umgebungsdruck aufweist.

13. Verfahren zur Energiespeicherung und Energierückgewinnung gemäß einem der Ansprüche 10 bis 12 **dadurch gekennzeichnet, dass** in Verfahrensschritt b) die Dampfeinspritzung (240) Wasserdampf vor Eintritt in die wenigstens eine Turbine (200, 205) in den Arbeitsmediumkreislauf (220) hinzufügt, sodass wenigstens eine Turbine (200,205) mit einem Gemisch aus Wasserdampf und sonstigem Arbeitsmedium beaufschlagt wird und so einen vom Arbeitsmediumkreislauf (220) abweichenden Massenstrom an Arbeitsmedium aufweist.

14. Verfahren zur Energiespeicherung und Energierückgewinnung gemäß einem der Ansprüche 10 bis 13 **dadurch gekennzeichnet, dass** in Verfahrensschritt c) wenigstens ein Verdichter (230,235) das Arbeitsmedium auf mindestens Umgebungsdruck verdichtet.

15. Verfahren zur Energiespeicherung und Energierückgewinnung gemäß einem der Ansprüche 10 bis 14 **dadurch gekennzeichnet, dass** in Verfahrensschritt c) in wenigstens einem Wärmeübertrager (210,260) eine Ausscheidung von Kondensat stattfindet, welches über die Kondensatleitung (60) dem Verdampfer (240) zugeführt wird und dort verdampft.
